# EUROPÄISCHE PATENTSCHRIFT

(11) **EP 1 074 522 B1**
(45) Veröffentlichungstag und Bekanntmachung des Hinweises auf die Patenterteilung: **12.05.2004**
(21) Anmeldenummer: 00116446.6
(22) Anmeldetag: 28.07.2000
(51) Int. Cl.: C03C 3/118

(54) **Blei- und bariumfreies Kristallglas**
Lead and barium free crystal glass
Verre cristal sans plomb et barium

(30) Priorität: 04.08.1999 DE 19936699
(43) Veröffentlichungstag der Anmeldung: 07.02.2001
(73) Patentinhaber: F.X. Nachtmann Bleikristallwerke GmbH, 92660 Neustadt a. d. Waldnaab (DE)
(72) Erfinder: Lenhart, Armin Dr.Prof., 91077 Neunkirchen a. Brand (DE)
(74) Vertreter: Matschkur, Lindner Blaumeier Patent- und Rechtsanwälte

(56) Entgegenhaltungen:
- WO-A-95/13993
- DE-A- 4 303 474
- US-A- 3 617 231
- US-A- 4 562 161

## Beschreibung

Die Erfindung betrifft ein Blei- und bariumfreies Kristallglas zur manuellen oder maschinellen Herstellung von hochwertigen Glasgegenständen mit einem Brechungsindex größer als 1,52 und einer Dichte von mindestens 2,45 g/cm³.

Auf Grund der auch in sehr geringen Mengen gegebenen Toxizität von Blei und Barium, welches in gewöhnlichem Kristallglas enthalten sind, und welches aus hieraus gefertigten Glasgegenständen schon nach kurzer Zeit ausgelaugt werden kann und in den menschlichen Organismus gelangen kann, besteht ein gestiegenes Interesse an blei- und bariumfreiem Kristallglas. Um Blei und Barium, welches im Kristallglas in Form von PbO und BaO vorliegt, zu ersetzen, wird bei bekannten blei- und bariumfreien Kristallgläsern K₂O und/oder ZnO in erhöhtem Maß zugegeben, wie beispielsweise in DE 43 03 474 C2 beschrieben. Hierdurch kann ein blei- und bariumfreies Kristallglas erschmolzen werden, welches einerseits im wesentlichen die physikalischen und chemischen Eigenschaften von blei- und bariumhaltigem Kristallglas aufweist, und andererseits die gesetzlichen Erfordernisse, die an blei- und bariumfreies Kristallglas. gestellt werden, nämlich einen Brechungsindex von größer als 1,52 und einer Dichte von mindestens 2,45 g/cm³ erfüllt. Wenngleich die physikalischen und chemischen Eigenschaften bekannten blei- und bariumfreien Kristallglases im Wesentlichen denen des bisher bekannten blei- und bariumhaltigen Kristallglases entsprechen, so gilt dies auch für die Verarbeitungsbedingungen, das heißt, auch die Schmelz- und Verarbeitungstemperaturen nunmehr bekannter blei- und bariumfreier Kristallgläser liegen im Bereich der vorbekannten "gewöhnlichen" Kristallgläser. In der Regel beträgt die Schmelztemperatur ca. 1450°C, die Verarbeitungstemperatur mit einer Viskosität η= 10⁴dPas liegt im Bereich oberhalb von 1000°C. So ist einerseits eine erforderlichen Mindestviskosität für eine hinreichende Verarbeitbarkeit zu erreichen, andererseits soll die Glastemperatur im Hinblick auf die Belastung der Verarbeitungsmaschinen nicht zu hoch sein.

Ferner ist als Stand der Technik DE 693 20 994 T2 zu nennen, aus der ein bleiund bariumfreies Kristallglas mit einem Brechungsindex von mehr als 1,52 bekannt ist, das für von Hand oder mittels Maschine hergestellte Gebrauchsglaswaren mit hohem Glanz- und hoher Lichtdurchlässigkeit vorgesehen ist. Die dort beschriebenen Glaszusammensetzungen sind im Wesentlichen bei den oben beschriebenen Verarbeitungsparametern zu verarbeiten

Ziel der Erfindung ist es, ein blei- und bariumfreies Kristallglas anzugeben, welches auf verbesserte Weise verarbeitet werden kann.

Dies wird mit einem blei- und bariumfreien Kristallglas der eingangs genannten Art erreicht, welches dadurch gekennzeichnet ist, dass es in Gew.% aus

| | |
|---|---|
| SiO₂ | 59,0 - 71,0 |
| TiO₂ | 0,001 - 8,0 |
| Al₂O₃ | 0,01 - 4,0 |
| CaO | 2,0 - 10,0 |
| MgO | 0,5 - 8,0 |
| ZnO | 0,01 - 11,0 |
| K₂O | 0,08 - 11,0 |
| Na₂O | 3,0 - 15,5 |
| Sb₂O₃ oder As₂O₃ | 0,001 - 1,5 |
| SrO | 0,001 - 0,1 |
| B₂O₃ | 0,01 - 3,0 |
| Li₂O | 0,01 - 2,0 |
| SO₄²⁻ | 0,0008-1,2 |
| F⁻ | 0,008 - 0,2 |

sowie wenigstens zwei Komponenten aus der Gruppe
Er₂O₃, Nd₂O₃, CeO₂, CoO, Pr₂O₃, SeO, NiO, MnO besteht
und einen Wassergehalt von 0,025 - 0,07 Gew.% aufweist.

Das erfindungsgemäße Kristallglas mit einem erhöhten Wassergehalt im Bereich von 0,025-0,007 Gew.% zeigt eine gegenüber Kristallglas mit einem niedrigeren Wassergehalt beachtlich veränderte Viskosität. Das Wasser, das in Form von Silanolgruppen in die Glasstruktur eingebaut wird, bewirkt, dass das Glas bei einer bestimmten Temperatur eine niedrigere Viskosität aufweist im Vergleich zu bekannten, einen geringeren Wassergehalt aufweisenden Kristallgläsern. Das Glas wird also dünnflüssiger. Dies bringt den beachtlichen Vorteil mit sich, dass eine verstärkte Wärmeabstrahlung während des Formgebungsverfahrens des zu verarbeiteten Glases auftritt, d. h., die Wärme wird schneller in Glasform abgeführt. Darüber hinaus ist ein schnelleres Erkalten zu beobachten. Auf Grund der ringeren Viskosität können die Maschinen ferner schneller laufen, da das verarbeitbare Glas schneller durch die Maschine gefördert werden kann. D. h., bei einer Beibehaltung des bisherigen Verarbeitungstemperaturen kann auf Grund der durch den erhöhten Wassergehalt erzielbaren geringeren Viskosität das Glas effizienter verarbeitet werden. Alternativ dazu besteht natürlich auch die Möglichkeit, die Verarbeitungstemperatur des Glases zu erniedrigen, da die übliche Verarbeitungsviskosität η=10⁴dPas bei deutlich niedrigeren Temperaturen erreicht wird. Die Temperaturdifferenz beträgt ΔT≈x•10°C, abhängig einerseits vom Wassergehalt, andererseits von der konkret gewählten Glaszusammensetzung. Dies wirkt sich wiederum vorteilhaft auf die Maschinenbelastung und damit die Standzeit aus.

Die erfindungsgemäß vorgeschlagene Erhöhung des Wassergehaltes im Glas kann einerseits durch Verwendung einer Sauerstoffbeheizung zum Aufschmelzen der Glasmasse vornehmlich in Verbindung mit wasserhaltigen Rohstoffen erreicht werden. Als "feuchte" Rohstoffe kann beispielsweise NaOH, Ca (OH)₂, Al(OH)₃, Na₂B₄O₇•xH₂O etc. und dergleichen verwendet werden. In Verbindung mit dem bei der Verbrennung des sauerstoffreichen Heizgases entstehenden Wassers kann eine Wassergehalterhöhung auf einfache Weise erreicht werden. Alternativ besteht die Möglichkeit, durch entsprechende Heizungsführung allein durch die Sauerstoffbeheizung den Wassergehalt zu erhöhen. Schließlich besteht die Möglichkeit, im Falle der Verwendung einer Elektrowanne zum Schmelzen der Glasmasse Wasserdampf in den Wannenbereich einzublasen und so die Ofenatmosphäre anzufeuchten. Das Wasser penetriert die Schmelze und wird in diese eingebunden.

Unter den oben genannten Glasbestandteilen wirkt SiO₂ als Netzwerkbildner. TiO₂ wirkt chromophor bezüglich eines sich bildenden Fe-Ti-Oxid-Komplexes und wirkt im Gegensatz zum SiO₂ den Brechungsindex erhöhend.

Al₂O₃ dient der Steigerung der chemischen Beständigkeit sowie der Stabilisierung des Netzwerkes. Ferner verringert es die Wannenkorrosion.

CaO, MgO und SrO steigern die chemische Beständigkeit und beeinflussen die Viskosität des Glases. Während CaO zu einem "kurzen" Glas führt, bewirken MgO und SrO die Bildung eines "langen" Glases.

ZnO wirkt als Zwischenoxid und bewirkt eine Steigerung. des Brechungsindex. Eine Funktion als Netzwerkwandler (Flussmittel) kommt Li₂O, Na₂O und K₂O zu. Unter diesen bewirkt Li₂O eine Steigerung des Brechungsindex.

Sb₂O₃ oder As₂O₃ werden als Läuterungsmittel zur Reduzierung der Blasen- und Schlierenbildung zugegeben. Beide sind gegeneinander austauschbar.

B₂O₃ ist ein starkes Flussmittel, welches die chemische Beständigkeit steigert.

Schließlich ist noch Sulfat (SO₄²⁻) enthalten, welches ebenfalls als Läuterungsmittel wirkt. Daneben ist ein geringer Gehalt an Flurid (F⁻) enthalten, welcher der Entfärbung dient und die Bildung des oben genannten Fe-Ti-Oxid-Komplexes stört. Der Gehalt F⁻ sollte jedoch gering bleiben im Hinblick auf eine mögliche HF-Gasbildung in der Wanne. Ferner enthält das erfindungsgemäße Glas wenigstens zwei Komponenten aus der Gruppe

| | |
|---|---|
| Er₂O₃ | 0,00001 - 0,01 |
| Nd₂O₃ | 0,00001 - 0,01 |
| CeO₂ | 0,001 - 0,2 |
| CoO | 0,00001 - 0,01 |
| Pr₂O₃ | 0,00001 - 0,01 |
| SeO | 0,0001 - 0,02 |
| NiO | 0,00001 - 0,01 |
| MnO | 0,001 - 0,05, |

wobei es sich bei diesen Verbindungen um Entfärbungsmittel handelt. Ziel ist es ein klares und transpartentes Kristallglas zu erhalten. Besonders bleibt die Rolle des Praseodym-Trioxid zu erwähnen. Praseodym besitzt aufgrund einer fluoreszierenden Eigenschaft eine leicht violette Färbung und wird normalerweise als Komplementärfarbe zu einer grünen Färbung führenden Fe-Ionen zugegeben. Daneben ermöglicht die fluoreszierende Eigenschaft auch, dass das Glas insgesamt bei hinreichend hohem Praseodym-Gehalt leicht fluoreszierend ist, was der Optik zuträglich ist, da das Glas dann einen leichten Nachleuchteffekt besitzt.

Besonders zweckmäßig ist es, wenn der Wassergehalt zwischen 0,035 und 0,06 Gewichtsprozent liegt.

Als vorteilhaft hat sich ferner erwiesen, dass Kristallglas in Gewichtsprozent

| | |
|---|---|
| La₂O₃ | 0,001-4,0 und |
| SnO | 0,001-3,0 enthält. |

La₂O₃ bewirkt eine Steigerung des Brechungsindex. SnO wirkt als Läuterungsmittel und dient ebenfalls der Blasen- und Schlierenreduzierung.

Weiterhin hat es sich als vorteilhaft erwiesen, wenn die Gehalte der als Entfärbungsmittel dienenden Glaskomponenten, von denen zur Herstellung eines transparenten, kristallklaren Glases mindestens zwei, bevorzugt aber mehrere vorgesehen sind, innerhalb der nachfolgend angegebenen Bereiche liegen.

| | |
|---|---|
| Er₂O₃ | 0,00001 - 0,01 |
| Nd₂O₃ | 0,00001 - 0,01 |
| CeO₂ | 0,001 - 0,2 |
| CoO | 0,00001 - 0,01 |
| Pr₂O₃ | 0,00001 - 0,01 |
| SeO | 0,0001 - 0,02 |
| NiO | 0,00001 - 0,01 |
| MnO | 0,001 - 0,05 |

Nachfolgend werden drei Beispiele erfindungsgemäßer Gläser sowie zu jedem Glas die Dichte ϕ(glcm³) der Brechungsindex n_{d} bei 589nm, die Temperaturen der Viskositätsstufen η= 10²dPas η=10⁴dPas η=10⁶dPas sowie die Abbe'sche Zahl υ angegeben. Die Bestimmung des Wassergehaltes des Glases wurde mittels IR-Spektruskopie vorgenommen. Hierzu werden die für wassercharakteristischen IR-Absorptionsbanden im Spektrum ausgewertet. Verwendet wurde ein Lamda-9-Spektrometer der Firma Perkin-Elmer. Die Bestimmung der Dichte erfolgt mit einem Sink-float-Gerät der Firma Ceast. Die Viskosität wurde mit einem Verfahren nach Vogel-Fulcher-Tammann bestimmt.

### Beispiel 1:

| Glaskomponenten: | Gehalt in Gew.% |
|---|---|
| SiO₂ | 69.0880 |
| TiO₂ | 0.3000 |
| Al₂O₃ | 0.3000 |
| CaO | 5.7000 |
| MgO | 4.5000 |
| ZnO | 0.7000 |
| K₂O | 1.4000 |
| Na₂O | 14.1000 |
| Sb₂O₃ | 0.4000 |
| SrO | 0.1000 |
| Fe₂O₃ | 0.0200 |
| B₂O₃ | 1.8000 |
| Li₂O | 0.5000 |
| La₂O₃ | 0.8000 |
| SnO | 0.3000 |
| SO₄²⁻ | 0.0200 |
| Cl⁻ | 0.0400 |
| F⁻ | 0.0010 |
| H₂O | 0.0300 |
| Er₂O₃ | 0.0002 |
| CoO | 0.0003 |
| Pr₂O₃ | 0.0001 |

Eigenschaften: Dichte ϕ in g/cm³ 2,539
Brechungsindex: n_{d} bei 589 nm 1,525
Viskosität η = 10²dPas bei T = 1.387°C
Viskosität η = 10⁴dPas bei T = 982°C
Viskosität η = 10⁶dPas bei T = 787°C
Eigenschaften: Abbe'sche Zahl υ: 59,1

Wie der Tabelle zu entnehmen ist, zeigte dieses Glas einen Wassergehalt von 0,03 Gew.%. Die Dichte der Glaszusammensetzung betrug 2,539 g/cm³ und liegt damit im geforderten Bereich. Entsprechendes gilt für den Brechungsindex, der mit 1,525 festgestellt wurde. Die gemessenen Temperaturen für die Viskositätsstufen η = 10²dPas, = 10⁴dPas, η = 10⁶dPas liegen deutlich unterhalb entsprechender bekannter Vergleichswerte. Soweit wird insbesondere die Viskosität η = 10⁴dPas, bei welcher in der Regel die Verarbeitung statt findet, bereits bei T = 982°C erreicht. Im Vergleich mit entsprechenden Glaszusammensetzungen, die nicht den erhöhten Wassergehalt aufweisen, konnten bezüglich der genannten Viskositätsstufen Temperaturdifferenzen ΔT = 20 - 40°C ermittelt werden. Für die Praxis bedeutet dies, dass sich bei üblichen Verarbeitungstemperaturen des aus der Schmelze abgezogenen und den Verarbeitungsmaschinen zugeführten Glases von oberhalb 1000°C eine noch geringere Viskosität ergibt, also ein flüssigeres Glas vorliegt. Hierdurch kann ein höherer Maschinendurchsatz erreicht werden, die Formbarkeit des Glases ist aufgrund der niedrigeren Viskosität besser, auch die Wärmeabfuhr ist verbessert, so dass sich insgesamt positivere Verarbeitungsbedingungen ergeben. Alternativ dazu besteht natürlich auch die Möglichkeit, das Glas mit etwas niedrigeren Temperatur bei welcher die Verarbeitungsviskosität gegeben ist, den Maschinen zuzuführen, so dass dort die thermische Belastung nicht so groß ist wie bisher.

### Beispiel 2:

| Glaskomponenten: | Gehalt in Gew.% |
|---|---|
| SiO₂ | 66.8000 |
| TiO₂ | 4.3200 |
| Al₂O₃ | 0.6200 |
| CaO | 5.4900 |
| ZnO | 4.5000 |
| K₂O | 1.4300 |
| Na₂O | 13.5000 |
| As₂O₃ | 0.4600 |
| Fe₂O₃ | 0.0066 |
| B₂O₃ | 0.5800 |
| La₂O₃ | 1.1300 |
| SnO | 0.8800 |
| SO₄²⁻ | 0.0010 |
| Cl⁻ | 0.0200 |
| F- | 0.0200 |
| H₂O | 0.0400 |
| Nd₂O₃ | 0.0002 |
| Pr₂O₃ | 0.0003 |

Eigenschaften: Dichte ϕ in g/cm³ 2,598
Brechungsindex: n_{d} bei 589 nm 1,5507
Viskosität η = 10²dPas bei T = 1.408°C
Viskosität η = 10⁴dPas bei T = 982°C
Viskosität η = 10⁶dPas bei T = 782°C
Eigenschaften: Abbe'sche Zahl υ: 49,75

Auch hier liegt die Dichte mit ϕ = 2,598 g/cm³ sowie der Brechungsindex mit 1,5507 im geforderten Bereich. Auch bei dieser Glaszusammensetzung werden die genannten Viskositätsstufen bereits bei hinreichend niedrigen Temperaturen mit Temperaturdifferenzen im Bereich zwischen ΔT = 20 - 40°C im Vergleich zu Vergleichszusammensetzungen mit niedrigerem Wassergehalt erreicht, was ebenfalls auf den erhöhten Wassergehalt bei der gegebenen Glaszusammensetzung zurückzuführen ist. Im Vergleich zum Beispiel 1 wurde hier als Läuterungsmittel anstelle von Sb₂O₃ das AS₂O₃ eingesetzt. Daneben wurden als Enfärbungsmittel Nd₂O₃ und Pr₂O₃ verwendet.

### Beispiel 3:

| Glaskomponenten: | Gehalt in Gew.% |
|---|---|
| SiO₂ | 66.051 |
| TiO₂ | 2.100 |
| Al₂O₃ | 1.400 |
| CaO | 8.400 |
| MgO | 2.500 |
| ZnO | 0.500 |
| K₂O | 4.900 |
| Na₂O | 13.140 |
| Sb₂O₃ | 0.400 |
| SrO | 0.200 |
| Fe₂O₃ | 0.009 |
| SnO | 0.400 |
| SO₄²⁻ | 0.080 |
| Cl⁻ | 0.050 |
| F⁻ | 0.010 |
| H₂O | 0.050 |
| CeO₂ | 0.0001 |
| Pr₂O₃ | 0.0003 |
| NiO | 0.0001 |

Eigenschaften: Dichte ϕ in g/cm³ 2,487
Brechungsindex: n_{d} bei 589 nm 1,521
Viskosität η = 10²dPas bei T = 1.405°C
Viskosität η = 10⁴dPas bei T = 998°C
Viskosität η = 10⁶dPas bei T = 800°C
Eigenschaften: Abbe'sche Zahl υ: 53,58

Auch hier liegt die Dichte ϕ = 2,487 und der Brechungsindex von 1,521 im geforderten Bereich. Die Viskositätsstufenwerte sind auch diesem Glas bei niedrigeren Temperaturen im Vergleich zu Glas ohne erhöhtem Wassergehalt erreicht. Die Tatsache, dass die Temperaturen höher sind als bei den Gläsern nach den Beispielen 1 und 2, wo jeweils ein geringerer Wassergehalt vorlag, dürfte auf die unterschiedliche Glaszusammensetzung zurückzuführen sein. Bei dem Glas nach Beispiel 3 wurde als Läuterungsmittel wiederum Sb₂O₃ verwendet, jedoch lag kein B₂O₃, Li₂O und La₂O₃ wie bei den Versätzen gemäß den Beispielen 1 und 2 vor. Ferner wurden hier als Entfärbungsmittel CeO₂, Pr₂O₃ und NeO verwendet. Fe₂O₃ liegt wie bei den anderen Versätzen als Verunreinigung vor. Zusammenfassend ist festzustellen, dass das Kristallglas bestehend aus den beschriebenen Komponenten, das einen erhöhten Wassergehalt aufweist, eine verbesserte Verarbeitungsmöglichkeit aufgrund der vorteilhaften Beeinflussung der Viskositätseigenschaften besitzt, die sich insbesondere bei maschineller Herstellung von Glasgegenständen vorteilhaft nutzen lässt.

## Patentansprüche

1. Blei- und bariumfreies Kristallglas zur manuellen oder maschinellen Herstellung von hochwertigen Glasgegenständen mit einem Brechungsindex grösser als 1,52 und einer Dichte von mindestens 2,45 g/cm³, **dadurch gekennzeichnet, dass** es in Gew.% aus
| | |
|---|---|
| SiO₂ | 59,0 - 71,0 |
| TiO₂ | 0,001 - 8,0 |
| Al₂O₃ | 0,01 - 4,0 |
| CaO | 2,0 - 1.0,0 |
| MgO | 0,5 - 8,0 |
| ZnO | 0,01 - 11,0 |
| K₂O | 0,08 - 11,0 |
| Na₂O | 3,0 - 15,5 |
| Sb₂O₃ oder As₂O₃ | 0,001 - 1,5 |
| SrO | 0,001 - 0,1 |
| B₂O₃ | 0,01 - 3,0 |
| Li₂O | 0,01 - 2,0 |
| SO₄²⁻ | 0,0008 - 1,2 |
| F⁻ | 0,008 - 0,2 |
sowie wenigstens zwei Komponenten aus der Gruppe
Er₂O₃, Nd₂O₃, CeO₂, CoO, Pr₂O₃, SeO, NiO, MnO besteht
und einen Wassergehalt von 0,025 - 0,07 Gew.% aufweist.

2. Blei- und bariumfreies Kristallglas nach Anspruch 1, **dadurch gekennzeichnet, dass** der Wassergehalt zwischen 0,035 und 0,06 Gew.% liegt.

3. Blei- und bariumfreies Kristallglas nach Anspruch 1 oder 2, **dadurch gekennzeichnet, dass** es ferner in Gew.%
| | |
|---|---|
| La₂O₃ | 0,001 - 4,0 und |
| SnO | 0,001 - 3,0 |
enthält.

4. Blei- und bariumfreies Kristallglas nach einem der vorangehenden Ansprüche, **dadurch gekennzeichnet, dass** der Gehalt (in Gew.%) an
| | |
|---|---|
| Er₂O₃ | 0,00001 - 0,01 |
| Nd₂O₃ | 0,00001 - 0,01 |
| CeO₂ | 0,001 - 0,2 |
| CoO | 0,00001 - 0,01 |
| Pr₂O₃ | 0,00001 - 0,01 |
| SeO | 0,0001 - 0,02 |
| NiO | 0,00001 - 0,01 |
| MnO | 0,001 - 0,05 |
beträgt.

## Claims

1. Lead- and barium-free crystal glass for the manual or machine production of high-quality glass objects, having a refractive index greater than 1.52 and a density of at least 2.45 g/cm³, **characterised in that** it consists, in per cent by weight, of
| | |
|---|---|
| SiO₂ | 59.0 - 71.0 |
| TiO₂ | 0.001 - 8.0 |
| Al₂O₃ | 0.01 - 4.0 |
| CaO | 2.0 - 10.0 |
| MgO | 0.5 - 8.0 |
| ZnO | 0.01 - 11.0 |
| K₂O | 0.08 - 11.0 |
| Na₂O | 3.0 - 15.5 |
| Sb₂O₃ or As₂O₃ | 0.001 - 1.5 |
| SrO | 0.001 - 0.1 |
| B₂O₃ | 0.001 - 3.0 |
| Li₂O | 0.01 - 2.0 |
| SO₄²⁻ | 0.0008 - 1.2 |
| F | 0.008 - 0.2 |
and at least two components from the group
Er₂O₃, Nd₂O₃, CeO₂, CoO, Pr₂O₃, SeO, NiO, MnO
and a water content of 0.025 - 0.07 % by weight.

2. Lead- and barium-free crystal glass according to claim 1, **characterised in that** the water content is between 0.035 and 0.06 % by weight.

3. Lead- and barium-free crystal glass according to claim 1 or 2, **characterised in that** it further contains in % by weight
| | |
|---|---|
| La₂O₃ | 0.001 - 4.0 and |
| SnO | 0.001 - 3.0. |

4. Lead- and barium-free crystal glass according to one of the preceding claims, **characterised in that** it contains the following in % by weight
| | |
|---|---|
| Er₂O₃ | 0.00001 - 0.01 |
| Nd ₂O₃ | 0.00001 - 0.01 |
| CeO₂ | 0.001 - 0.2 |
| CoO | 0.00001 - 0.01 |
| Pr₂O₃ | 0.00001 - 0.01 |
| SeO | 0.0001 - 0.02 |
| NiO | 0.00001 - 0.01 |
| MnO | 0.001 - 0.05. |

## Revendications

1. Verre de cristal sans plomb et sans baryum, destiné à la fabrication manuelle ou mécanique d'objets en verre de valeur élevée présentant un indice de réfraction supérieur à 1,52 et une densité d'au moins 2,45 g/cm³, **caractérisé en ce qu'**il compose, en % en poids, de
| | |
|---|---|
| SiO₂ | 59,0 - 71,0 |
| TiO₂ | 0,001 - 8,0 |
| Al₂O₃ | 2,0 - 10,0 |
| CaO | 2,0 - 10,0 |
| MgO | 0,5 - 8,0 |
| ZnO | 0,01 - 11,0 |
| K₂O | 0,08 - 11,0 |
| Na₂O | 3,0 - 15,5 |
| S b₂O₃ ou As₂O₃ | 0,001 - 1,5 |
| SrO | 0,001 - 0,1 |
| B₂O₃ | 0,01 - 3,0 |
| Li₂O | 0,01 - 2,0 |
| SO₄²⁻ | 0,0008 - 1,2 |
| F⁻ | 0,008 - 0,2 |
ainsi que d'au moins deux composants choisis dans le groupe constitué par Er₂O₃, Nd₂O₃, CeO₂, CoO, Pr₂O₃, SeO, NiO, MnO et présentant une teneur en eau de 0,025 - 0,07 % en poids.

2. Verre de cristal sans plomb et sans baryum selon la revendication 1, **caractérisé en ce que** sa teneur en eau est comprise entre 0,035 et 0,06 % en poids.

3. Verre de cristal sans plomb et sans baryum selon l'une des revendications ou 2, **caractérisé en ce qu'**il contient au surplus, en % en poids :
| | |
|---|---|
| La₂O₃ | 0,001 - 4,0 et |
| SnO | 0,001 - 3,0 |

4. Verre de cristal sans plomb et sans baryum selon l'une quelconque des revendications précédentes, **caractérisé en ce qu'**il contient, en % en poids :
| | |
|---|---|
| Er₂O₃ | 0,00001 - 0,01 |
| Nd₂O₃ | 0,00001 - 0,01 |
| CeO₂ | 0,001 - 0,2 |
| CoO | 0,00001 - 0,01 |
| Pr₂O₃ | 0,00001 - 0,01 |
| SeO | 0,0001 - 0,02 |
| NiO | 0,00001 - 0,01 |
| MnO | 0,001 - 0,05. |
